Europäisches Patentamt

European Patent Office

Office européen des brevets

(11) Publication number: **0 029 056**
**B1**

# EUROPEAN PATENT SPECIFICATION

(45) Date of publication of patent specification: **20.11.86**

(51) Int. Cl.⁴: **G 06 K 7/14**

(21) Application number: **80901053.1**

(22) Date of filing: **07.05.80**

(86) International application number:
**PCT/US80/00543**

(87) International publication number:
**WO 80/02615 27.11.80 Gazette 80/27**

(54) **OPTICAL DATA SENSING APPARATUS.**

(30) Priority: **14.05.79 US 39013**

(43) Date of publication of application:
**27.05.81 Bulletin 81/21**

(45) Publication of the grant of the patent:
**20.11.86 Bulletin 86/47**

(84) Designated Contracting States:
**DE FR GB**

(56) References cited:
**US-A-3 417 234**
**US-A-3 474 234**
**US-A-3 539 777**
**US-A-3 673 417**
**US-A-3 737 628**
**US-A-3 766 364**
**US-A-3 809 893**
**US-A-3 904 110**
**US-A-3 953 730**
**US-A-4 122 997**
**US-A-4 172 554**

(73) Proprietor: **NCR Corporation**
**World Headquarters**
**Dayton, Ohio 45479 (US)**

(72) Inventor: **PASSER, Barry E.**
**Apt. 1, 301 West Green Street**
**Ithaca, NY 14850 (US)**
Inventor: **SCULLEY, George A.**
**1401 Tracy Street**
**Endicott, NY 13760 (US)**

(74) Representative: **Robinson, Robert George**
**International Patent Department NCR Limited**
**206 Marylebone Road**
**London NW1 6LY (GB)**

Courier Press, Leamington Spa, England.

## Description

This invention relates to an optical data sensing apparatus.

This application is related to an international application filed by the present Applicants on the same day as the present application entitled "Code Sensing System".

## Background Art

The use of bar code symbols on labels or articles as a means for acquiring data at a point of sale is well-known. In reading these bar code labels, it is necessary to provide clock pulses or other type of synchronizing signal in order that the information be properly entered from a sensing device to a utilization device. It is further necessary to provide an accurate time relationship between the movement of the sensing device with respect to the bar code symbols and the clock pulses in order for the information received to be accurately decoded.

To meet these requirements, a prior bar code sensing system as disclosed in U.S. Patent 3,409,760 includes a bar code label having a separate clock symbol adjacent each data symbol position of the label, both data and clock symbols being clocked simultaneously. This prior art system employs a hand held label reader wherein the reader is held against the label and the head rotated.

With a bar code sensing system, when the movement between the sensing device and the bar code symbol is intermittent, simultaneous sensing of data and clock signals such as is disclosed in said U.S. patent has been found inadequate to ensure that the system operates satisfactorily.

An optical data sensing apparatus for sensing the existence of marks within preprinted box areas arranged in rows and columns on a card is disclosed in U.S. Patent No. 3904110. In order for the apparatus to reliably read marks that occupy only small portions of box areas, while being insensitive to smudges resulting from erasures, each row of box areas is associated with a respective optical sensor responsive to light from a narrow region only on the card, and each column of box areas is associated with a strobe mark associated with a further optical sensor, each strobe mark being offset from the associated column of box areas so that the strobe mark is sensed subsequently to the sensing of marks in the associated column. The sensors for the rows of box areas are respectively associated with memories each of which is arranged to change from a reset condition to a set condition when its corresponding sensor detects a mark. The sensor for the strobe marks generates a strobe signal that reads out all of these memories.

## Disclosure of the Invention

It is an object of this invention to provide an optical data sensing apparatus for sensing coded symbols arranged in parallel data and clocking tracks on a record member, each indicium in the clocking track being aligned with a corresponding indicium in the data track in a direction transverse to the length of each track, which apparatus will operate satisfactorily when the record member is driven intermittently past a sensing device, and which is inexpensive to manufacture and simple in construction.

According to the invention there is provided an optical data sensing apparatus arranged to sense indicia disposed in parallel data and clocking tracks on a record member, each indicium in the clocking track being aligned with a corresponding indicium in the data track in a direction transverse to the length of each track, said apparatus including scanning means arranged to scan said indicia, said scanning means including a first light sensor and a second light sensor for sensing said data track and said clocking track respectively, characterized by drive means for moving said record member along a scanning path past said first and second sensing means, housing means having a scanning surface associated with said scanning path, said first and second light sensors being mounted in said housing means, a pair of apertures located in said scanning surface and respectively associated with the data and clocking tracks, one of said apertures being offset relative to the other aperture along the path of movement of said record member, a source of light mounted in said housing means, and light-transmitting means located within said housing means and being in communication with said source of light, said first and second light sensors, and said apertures whereby light is transmitted from said light source to said data and clocking tracks on said record member and reflected back to said first and second light sensors.

## Brief Description of the Drawings

One embodiment of the invention will now be described with reference to the accompanying drawings, in which:—

Fig. 1 is a graphic representation of bar code symbols of a first type for use with an optical data sensing apparatus in accordance with the present invention, their associated numerical values being indicated;

Fig. 2 is a graphic representation of bar code symbols of a second type for use with an optical data sensing apparatus in accordance with the present invention, their associated numerical values being indicated;

Fig. 3 is a plan view of a record member on which is located a bar code label;

Fig. 4 is a top view of an optical data sensing apparatus in accordance with the present invention, in which the record member of Fig. 3 is positioned for a printing operation;

Fig. 5 is a side view of a portion of the apparatus shown in Fig. 4 in which the record member is positioned adjacent a scanning means for the record member;

Fig. 6 is a schematic representation of the arrangement of the sensing elements in the scanning means;

Fig. 7 is an exploded view of the scanning means;

Fig. 8 is a cross-sectional view of an optical channel in the scanning means in which are located optical fibers for transmitting light rays generated during a sensing operation;

Fig. 9 is an end view of an aperture in a contact surface of the scanning means showing the arrangements of the optical fibers for transmitting and receiving the light rays generated during a sensing operation;

Fig. 10 shows a plurality of waveforms generated during a sensing operation of the scanning means; and

Fig. 11 is a plan view of the contact surface of the scanning means showing the off-set relationship of the two sensing apertures located therein.

Best Mode for Carrying Out the Invention

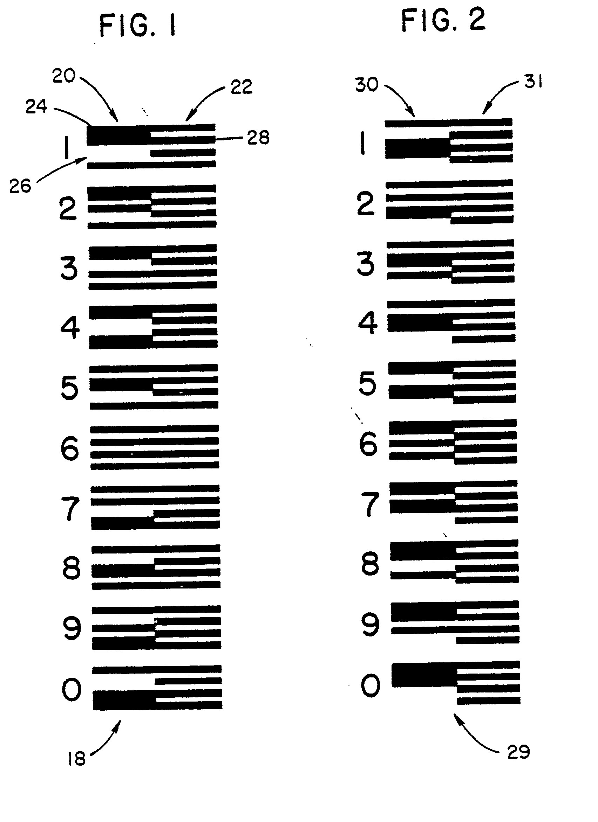

Referring now to Fig. 1, there is shown a graphic representation of a first type of bar code symbol, generally indicated by the numeral 18, each bar code symbol 18 including a character bar code symbol 20 and a clock bar code symbol 22. The character bar code symbols are arranged to be representative of each of the numerical characters 0—9 inclusive and form a data track when located on an item to be processed. Each of the bar code symbols 20 comprises a series of black 24 and white 26 bars of various thicknesses with each of the bar code symbols 20 being composed of seven equal width data elements called modules, wherein each module may be white or black. In sensing the bar code symbols 20 and 22, each white module or space is assigned the value of 0 while a black module is assigned the value of 1 in a manner that is well-known in the art. It will be noted that the first and last bar of each bar code symbol 20 is black, which characteristic is used in the control of the operation of a motor drive mechanism. By using binary bits for the black and white module representations, each bar code symbol 20 is arranged to provide a 7-bit pattern. Thus, the decimal or character 1 may be represented in the bar code symbols 20 of Fig. 1 by the 7-bit pattern 1110001. In keeping with this format, the decimal 1 should be comprised of a black bar of a 3-bit width, followed by a white bar or space of a 3-bit width and a 1-bit wide bar.

As previously described, associated with each of the data bar code symbols 20 (Fig. 1) is a second bar code symbol 22 representing clock signals and comprising four equally-spaced black bars 28, each of which functions as a bit location reference for the corresponding bits of the numerical character in the character symbol 20 in a manner that will be described more fully hereinafter. The clock bar code symbol 22 taken in conjunction with its associated character bar code symbol 20 allows each coded character to be self-clocking and thereby independent of the speed of the movement of a bar code label past a sensing member. While the bar code symbols 20 and 22 of Fig. 1 are shown attached, it is obvious that they may be separated and still function for their intended purpose, provided that the code symbols 20 and 22 are aligned as shown, that is to say with the bars of the code symbols 22 aligned with the data elements or modules of the code symbols 20.

Referring now to Fig. 2, there is shown a graphic representation of a second type of bar code symbols generally indicated by the numeral 29 which are used as the last or end-of-character bar code symbol of a bar code label. Each of the end-of-code symbols 29 include a character bar code symbol 30 which is similar to its corresponding character bar code symbol 20 (Fig. 1) in that the first bar is always black. The remaining bar positions 2—7 inclusive are inverted, that is, a 1 bit appears in the end-of-code character symbol 29 where a 0 bit was in the same location in the corresponding character bar code symbol 20. The bit arrangements of the bar code symbols 18 and 29 may be readily deduced from Figs. 1 and 2. A table setting out these bit arrangements is included in the previously mentioned related international application. It should be noted that in either case, each bar code symbol includes four binary bit 1's which characteristic is used as a parity check. The end-of-code clock bar code symbols 29 have an associated clock bar code symbol 31 (Fig. 2) similar to the clock bar code symbols 22 (Fig. 1) and which functions in the same manner.

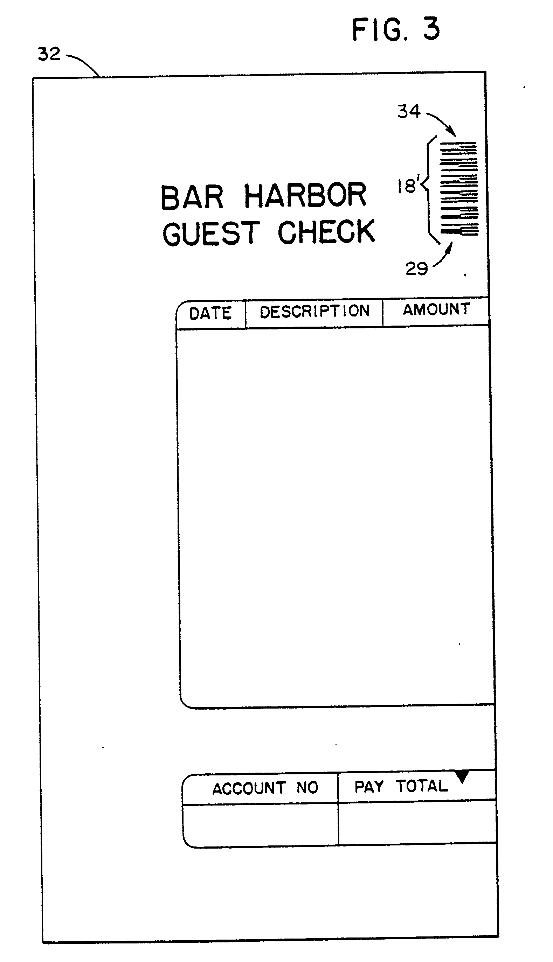

Referring now to Fig. 3, there is shown a plan view of a record member 32 such as a check member which is issued by a motel or hotel and on which the customer's charges are printed. Upon registration, the customer is assigned a check member 32 on which is printed a bar code label 34 which comprises a row 18' of bar code symbols 18 (Fig. 1) together with an end-of-code bar code symbol 29 (Fig. 2), the character bar code symbols 20, 30 of the row forming a data track and the clock bar code symbols 22, 31 forming a clocking trade parallel to the data track. The bar code label 34 comprises an account number. Any charges incurred by the customer are printed on the check by inserting the check into a printing station located in a data terminal device and inserting the amount of the charge into a printing mechanism through a keyboard in a manner that is well-known in the art. A motor drive member in the terminal device will drive the check member 32 to a position adjacent the printing members in the printing mechanism which prints the amount of the charge on the check member 32. During an initial movement of the check member 32 by the drive member, a sensing member located in the printing station will read the bar code label 34, enabling the terminal device to identify the customer's account number so that the amount being printed can be added to a running total of the entries on the check member. At check-out time, the total amount due is printed on the check for payment by the customer.

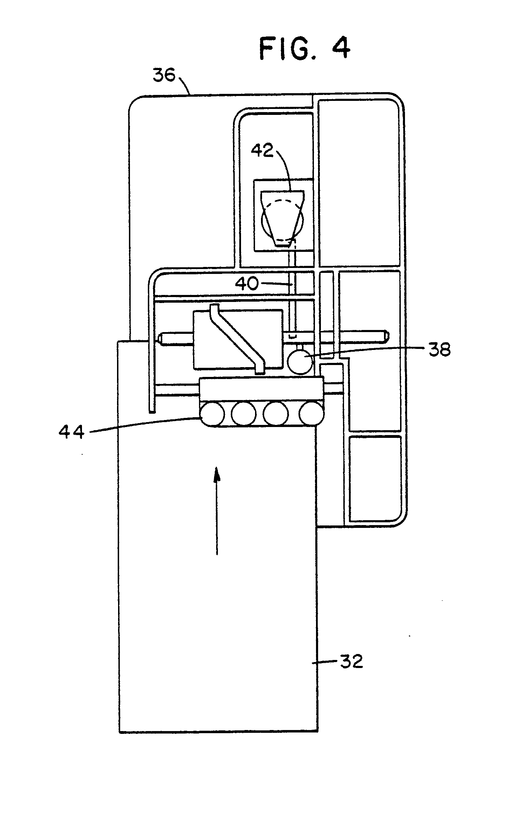

Referring now to Fig. 4, there is shown a top view of an optical data sensing apparatus in accordance with the present invention which includes a table having a supporting surface 36 on which is positioned the check member 32 which is driven inwardly in the direction as indicated by the arrow by a drive mechanism past a scanning means or sensing assembly 38 and into engagement with a stop arm 40 selectively positioned by a solenoid 42. The check member 32 will be driven inwardly during which time the sensing assembly 38 will read the bar code label 34 (Fig. 3) until it reads the end-of-code bar code symbol 29 at which time the driving mechanism is deenergized. A printing mechanism 44 positioned adjacent the top of the check member 32 is then operated to print out the required data on the check member. This sequence of operations is repeated each time a charge is to be made against the customer's account number and printed on the check member 32.

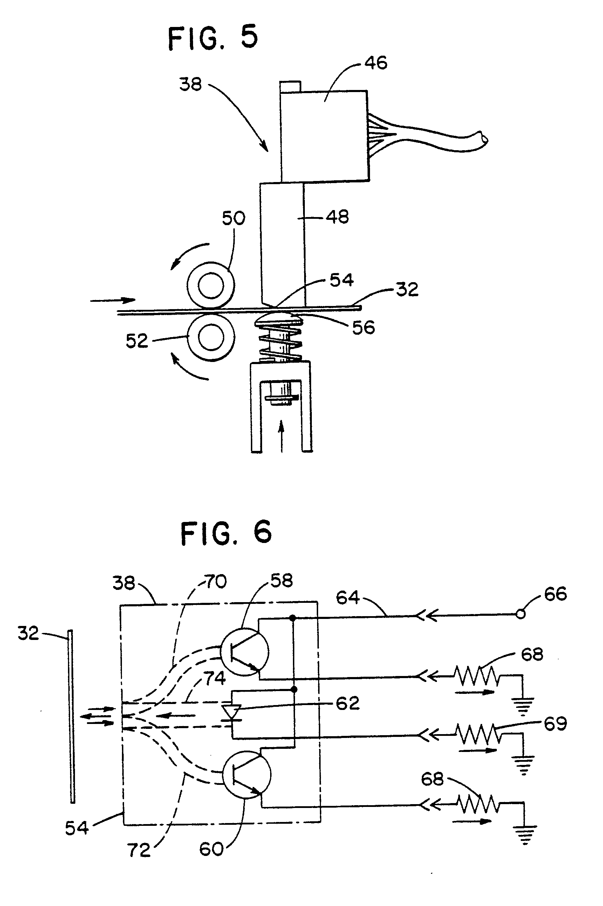

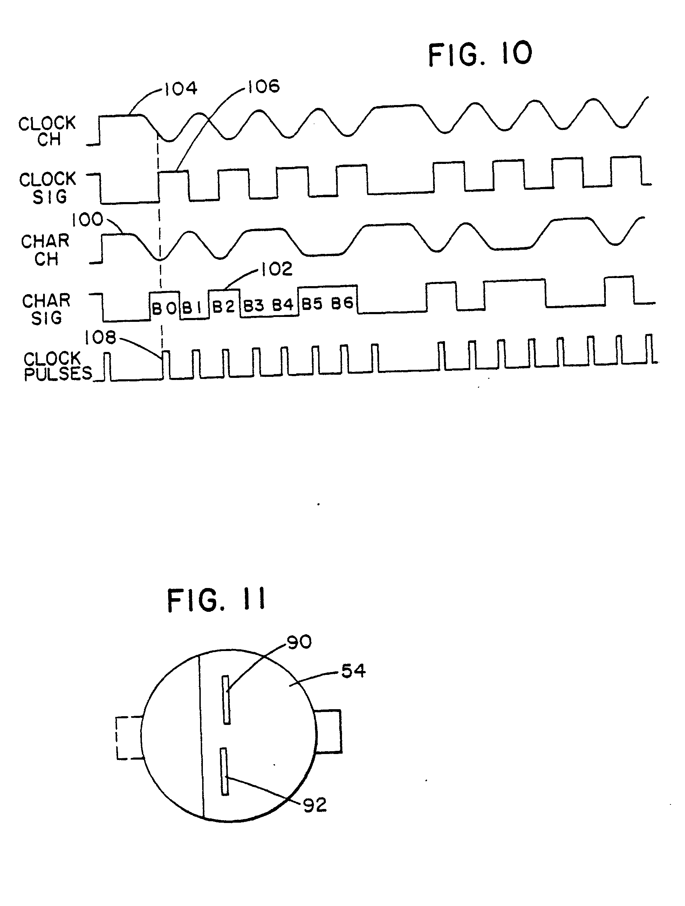

Referring now to Fig. 5 there is shown a side view of a portion of the sensing apparatus of Fig. 4 showing the sensing assembly 38 positioned against the check member 32. The sensing assembly 38 includes an upper housing 46 in which are located photo-transistors and a light-emitting diode used in the sensing operation and a lower housing 48 in which are located a plurality of optical fibers for transmitting and receiving light rays directed at the surface of the check member 32. The check member 32 is engaged by a pair of drive rollers 50 and 52 which operate to drive the check member 32 in the direction as indicated by the horizontal arrow. The check member 32 is urged into engagement with a contact surface 54 (Figs. 5 and 11) of the lower housing 48 by a spring-urged compensator member 56 during which time the sensing assembly 38 will scan and read the bar code label 34 on the check member 32 when driven by operation of the drive rollers 50 and 52.

Referring now to Fig. 6 there is shown a schematic representation of the sensing elements included in the sensing assembly 38 comprising a pair of photo-transistors 58 and 60 together with a light-emitting diode 62. The collectors of the photo-transistors 58 and 60 together with one side of the diode 62 are connected over line 64 to a suitable voltage supply 66 in which current will flow through the lines 64, the photo-transistors 58 and 60 and through dropping resistors 68 to ground, thereby enabling the photo-transistors to output analog signal in response to receiving light rays transmitted through a plurality of optical fibers located in associated channels 70 and 72 respectively, the ends of which are positioned in apertures located in the contact face 54 of the sensing assembly 38. The light rays transmitted through the channels 70 and 72 are generated by the energizing of the light-emitting diode 62 through the dropping resistor 69. The light rays are transmitted from diode 62 through a plurality of optical fibers located in a channel 74 and which are directed at the bar code label located on the check member 32.

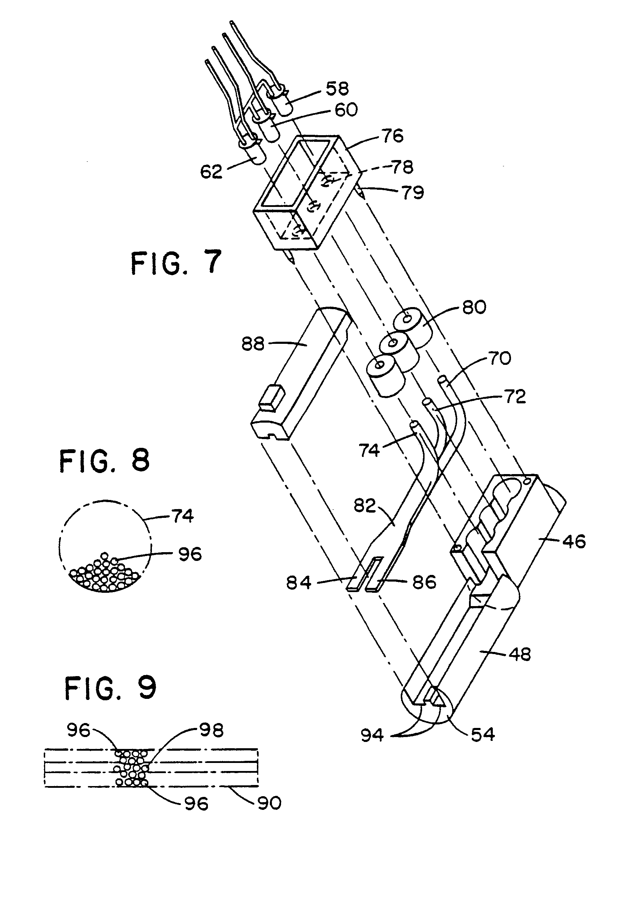

Referring now to Fig. 7, there is shown an exploded view of the sensing assembly 38 of the present embodiment which includes the diode 62, and the phototransistors 58 and 60. The diode 62 and the photo-transistors 58 and 60 are located in a housing 76 by being mounted within an associated aperture 78 located in the floor of the housing 76 and in which are also positioned the ends of their associated channels 70—74 inclusive. Each of the channels 70—74 inclusive is secured to the housing 76 by a terminal 80. The housing 76 is then secured to the upper housing 46 of the sensor assembly by any suitable fastening means such as screws 79 which positions a lower channel 82 formed by the termination portions of the channels 70—74 inclusive in the lower housing 48. As shown, the channel portion 82 is formed into two leg segments 84 and 86 whose ends are positioned adjacent the contact face 54 of the lower housing 48. A cap member 88 locates the channel portion 82 within the lower housing member 48 and when secured to the lower housing member 48 aligns apertures 90 and 92 (Fig. 11) in the contact surface 54 with a pair of corresponding slots 94 located in the housing member 48. As shown in Fig. 11, the open end of the leg segment 84 positioned in the aperture 90 is offset with respect to the open end of the leg segment 86 positioned in the aperture 92.

Located in each of the channels 70—74 inclusive (Fig. 7) are a plurality of optical fibers 96, 98 which extend from a position adjacent the photo-transistors 58 and 60 and the diode 62 to a position adjacent the open end of the leg segments 84 and 86 in a manner that is well-known in the art. The arrangement of the optical fibers 96 in the channel 74 is shown in Fig. 8. As shown in Fig. 9 the optical fibers 96 positioned within the channel 74 associated with the light-emitting diode 62 are positioned on the outside of the optical fibers 98 when located in the open end of the leg segments 84 and 86 positioned in the apertures 90 and 92. The optical fibers 96 surround the optical fibers 98 located in the channels 70 and 72, the latter transmitting the reflected light rays from the face of the bar code label 34 to their associated photo-transistors 58 and 60. As shown in Fig. 11, the aperture 90 is offset relative to the aperture 92 in the direction of movement of the clocking member 32 by a predetermined amount which in this case is one half the width of a bar element 28 (Fig. 1). In reading a bar code symbol 18 (Fig. 1), the optical fibers 98 in the aperture 92 will transmit the light reflected from the character bar code symbol 20, 30 to the transistor 58 while the optical fibers 98 in the aperture 90 will transmit the light reflected from the clock bar code symbols 22, 31 to the transistor 60.

Referring now to Fig. 10, there is shown the signals generated by the photo-transistors 58 and 60 in response to receiving the light rays transmitted by the optical fibers in the channels 70 and 72 as the result of sensing a bar code label 34 (Fig. 3). As shown, the photo-transistor 58 will output the analog waveform signal 100 which signal is digitized by means not shown to produce the square waveform signal 102. The photo-transistor 60 will generate the clock analog waveform signal 104 which signal is also digitized to produce the square waveform signal 101. A number of clock pulses 108 are generated by means not shown on the rising and falling edges of the clock waveform signal 106. It will be seen that the clock pulses 108 occur in the middle of those portions of the waveform signal 102 which correspond to bit positions B0—B6 inclusive in each of the character bar code symbols 20, 30, the clock pulses being used to load said portions of the signal 102 into a shift register (not shown) and to thereby ensure that the character data being generated by the photo-transistor 58 is an accurate representation of the data being sensed.

For a description of the circuitry which may be used for producing the square waveform signals 102 and 106 and the clock pulses 108 and for processing these signals, reference may be made to the previously mentioned related international application.

It is found that, by arranging that the clock pulses 108 occur in the middle of those portions of the waveform signal 102 which correspond to the bit positions B0—B6 inclusive, optimum bar code reading is achieved when the check member 32 is intermittently driven. Also, with the apparatus described above a compact label arrangement may be employed.

A further advantage of the apparatus described above is that it is inexpensive to manufacture and simple in construction.

## Claims

1. An optical data sensing apparatus arranged to sense indicia disposed in parallel data and clocking tracks on a record member (32), each indicium in the clocking track being aligned with a corresponding indicium in the data track in a direction transverse to the length of each track, said apparatus including scanning means arranged to scan said indicia, said scanning means including a first light sensor (58) and a second light sensor (60) for sensing said data track and said clocking track respectively, characterized by drive means (50, 52) for moving said record member (32) along a scanning path past said first and second sensing means, housing means (46, 48) having a scanning surface (54) associated with said scanning path, said first and second light sensors (58, 60) being mounted in said housing means, a pair of apertures (90, 92) located in said scanning surface and respectively associated with the data and clocking tracks, one of said apertures (90) being offset relative to the other aperture (92) along the path of movement of said record member, a source of light (62) mounted in said housing means (46, 48), and light-transmitting means (70, 72, 74) located within said housing means and being in communication with said source of light (62), said first and second light sensors (58, 60), and said apertures (90, 92) whereby light is transmitted from said light source to said data and clocking tracks on said record member and reflected back to said first and second light sensors.

2. An apparatus according to claim 1, characterized in that said apparatus is arranged to derive a square waveform signal (102) from the indicia in said data track, and is arranged to derive clock pulses (108) from the indicia in said clocking track, said clock pulses being arranged to occur in a central part of those portions of said square waveform signal (102) corresponding to bit positions (B0—B6) represented by the indicia in said data track.

3. An optical data sensing system including in combination an apparatus according to either claim 1 or claim 2, and said record member (32), the indicia of said clocking track having a constant width, characterized in that said said apertures (90, 92) are offset with respect to each other by a distance equal to one-half of said constant width.

## Patentansprüche

1. Optisches Datenabtastgerät zum Abtasten von Markierungen, die in parallelen Daten- und Taktspuren auf einem Aufzeichnungsträger (32) angeordnet sind, wobei jede Markierung in der Taktspur ausgerichtet ist mit einer entsprechenden Markierung in der Datenspur in Richtung quer zur Länge jeder Spur, wobei das Gerät eine Abtastvorrichtung zur Abtastung der Markierungen aufweist, die einen ersten Lichtsensor (58) und einen zweiten Lichtsensor (60) zum Abtasten der Datenspur bzw. der Taktspur aufweist, gekennzeichnet durch Antriebsvorrichtungen (50, 52) zum Bewegen des Aufzeichnungsträgers (32) längs eines Abtastweges vorbei an der ersten und zweiten Abtastvorrichtung, Gehäuse (46, 48) mit einer Abtastfläche (54), die dem Abtastweg zugeordnet ist, wobei der erste und zweite Lichtsensor (58, 60) in den Gehäuse untergebracht ist, ein Paar Öffnungen (90, 92), die in der Abtastfläche angeordnet und entsprechend der Daten- und Taktspur zugeordnet sind, wobei eine der Öffnungen (90) bezüglich der anderen Öffnung (92) längs des Bewegungsweges des Aufzeichnungsträgers versetzt ist, eine Lichtquelle (62), die in den Gehäuse (46, 48) untergebracht ist und Lichtübertragungsvorrichtungen (70, 72, 74), die in den Gehäuse angeordnet sind und in Wirkbeziehung mit der Lichtquelle (62), dem ersten und zweiten Lichtsensor (58, 60) und den Öffnungen (90, 92) stehen, so daß Licht von der Lichtquelle zu der Daten- und Taktspur auf dem Aufzeichnungsträger übertragen und auf den ersten und zweiten Lichtsensor reflektiert wird.

2. Gerät nach Anspruch 1, dadurch gekennzeichnet, daß das Gerät angeordnet ist, um ein Rechtecksignal (102) von den Markierungen in der Datenspur abzuleiten, sowie angeordnet, um Taktimpulse (108) von den Markierungen in der Taktspur abzuleiten, wobei die Taktimpulse in einem zentralen Teil derjenigen Abschnitte des Rechtecksignals (102) auftreten können, die Bit-Positionen (B0—B6) entsprechen, die durch die Markierungen in der Datenspur dargestellt werden.

3. Optisches Datenabtastsystem mit einer Kombination eines Gerätes nach Anspruch 1 oder 2 mit dem Aufzeichnungsträger (32), wobei die Markierungen in der Taktspur konstante Breite besitzen, dadurch gekennzeichnet, daß die Öffnungen (90, 92) zueinander um einen Abstand versetzt sind, der gleich der Hälfte der konstanten Breite ist.

**Revendications**

1. Appareil de détection optique de données conçu pour détecter des symboles codés disposés en pistes parallèles de données et de synchronisation sur un élément d'enregistrement (32), chaque symbole codé de la piste de synchronisation étant aligné sur un symbole codé correspondant de la piste de données dans une direction transversale à la longueur de chaque piste, ledit appareil comprenant des moyens de lecture agencés pour lire lesdits symboles codés, lesdits moyens de lecture comprenant un premier détecteur de lumière (58) et un second détecteur de lumière (60) destinés à la détection de ladite piste de données et de ladite piste de synchronisation, respectivement, caractérisé par des moyens d'entraînement (50, 52) destinés à déplacer ledit élément d'enregistrement (32) le long d'un trajet de lecture passant devant lesdits premier et second moyens de détection, des moyens de boîtiers (46, 48) présentant une surface de lecture (54) associée audit trajet de lecture, lesdits premier et second détecteurs de lumière (58, 60) étant montés dans lesdits moyens de boîtiers, deux ouvertures (90, 92) situés dans ladite surface de lecture et associées respectivement aux pistes de données et de synchronisation, l'une desdites ouvertures (90) étant décatée par rapport à l'autre ouverture (92) le long du trajet du mouvement dudit élément d'enregistrement, une source de lumière (62) montée dans lesdits moyens de boîtiers (46, 48), et des moyens (70, 72, 74) de transmission de lumière situés à l'intérieur desdits moyens de boîtiers et en communication avec ladite source de lumière (62), lesdits premier et second détecteurs de lumière (58, 60) et lesdites ouvertures (90, 92) de manière que de la lumière soit transmise de ladite source de lumière vers lesdites pistes de données et de synchronisation situées sur ledit élément d'enregistrement et qu'elle soit renvoyée par réflexion vers lesdits premier et second détecteurs de lumière.

2. Appareil selon la revendication 1, caractérisé en ce que ledit appareil est conçu pour dériver un signal (102) à forme d'onde carrée à partir des symboles codés présents sur ladite piste de données, et est conçu pour dériver des impulsions d'horloge (108) à partir des symboles codés présents sur ladite piste de synchronisation, lesdites impulsions d'horloge étant agencées pour apparaître dans une portion centrale des parties dudit signal (102) à forme d'onde carrée correspondant à des positions de bits (B0—B6) représentées par lesdits symboles codés présents sur ladite piste de données.

3. Système de détection optique de données comprenant, en combinaison, un appareil selon la revendication 1 ou la revendication 2, et ledit élément d'enregistrement (32), les symboles codés de ladite piste de synchronisation ayant une largeur constante, caractérisé en ce que lesdites ouvertures (90, 92) sont décalées l'une par rapport à l'autre d'une distance égale à la moitié de ladite largeur constante.

# FIG. 1

# FIG. 2

FIG. 3

32

34

BAR HARBOR
GUEST CHECK

18'

29

| DATE | DESCRIPTION | AMOUNT |
|------|-------------|--------|
|      |             |        |

| ACCOUNT NO | PAY TOTAL ▼ |
|------------|-------------|
|            |             |

2

# FIG. 4

# FIG. 5

# FIG. 6

0 029 056

FIG. 7

FIG. 8

FIG. 9

5

FIG. 10

FIG. 11